# EUROPÄISCHE PATENTSCHRIFT

(11) **EP 3 012 698 B1**
(45) Veröffentlichungstag und Bekanntmachung des Hinweises auf die Patenterteilung: **06.12.2017**
(21) Anmeldenummer: 15189990.3
(22) Anmeldetag: 15.10.2015
(51) Int. Cl.: G05B 19/042

(54) **SYSTEM UND VERFAHREN ZUR DRAHTLOSEN KONFIGURATION UND/ODER PARAMETRIERUNG VON KLEINSTEUERGERÄTEN**
SYSTEM AND METHOD FOR WIRELESS CONFIGURATION AND/OR PARAMETERISING OF SMALL CONTROL DEVICES
SYSTEME ET PROCEDE DE CONFIGURATION ET/OU PARAMETRAGE SANS FIL D'APPAREILS DE COMMANDE MINIATURES

(30) Priorität: 22.10.2014 DE 102014115406
(43) Veröffentlichungstag der Anmeldung: 27.04.2016
(73) Patentinhaber: PHOENIX CONTACT GmbH & Co. KG, 32825 Blomberg (DE)
(72) Erfinder: GRUBE, Kai, 31848 Bad Münder (DE); SÄCK, Klaus-Peter, 32760 Detmold (DE)
(74) Vertreter: Blumbach Zinngrebe

(56) Entgegenhaltungen:
- WO-A1-2007/025879
- DE-A1-102011 078 366
- DE-A1-102013 202 564

## Beschreibung

Die Erfindung betrifft ein System zur Konfiguration und/oder Parametrierung von Kleinsteuergeräten, wobei Konfigurations- und/oder Parametrierdaten, welche für die Kleinsteuergeräte bestimmt sind, drahtlos an diese übertragen werden, sowie ein Kleinsteuergerät, eine Software-Applikation und ein Verfahren zur entsprechenden Konfiguration und/oder Parametrierung eines Kleinsteuergeräts. Unter dem Begriff Kleinsteuergeräte werden im Rahmen der vorliegenden Anmeldung insbesondere Schaltgeräte oder -relais, insbesondere auch Sicherheitsschaltgeräte bzw. -relais umfasst.

Durch den Einzug der Mikrocontrollertechnik auch in kleine Schaltgeräte besteht der Bedarf, diese auch im eingebauten Zustand parametrieren und konfigurieren zu können. Dabei wird auf derartigen Geräten oftmals eine normierte oder proprietäre leitungsgebundene Schnittstelle zu einem Netzwerk vorgesehen, beispielsweise eine USB-, RS232-oder Ethernet-Schnittstelle, so dass die Konfigurations-und/oder Parametrierdaten in der Regel mittels Software auf das Kleinsteuergerät geladen bzw. übertragen werden können. Die Speicherung dieser Daten erfolgt meist auf einem Speichermedium, das heißt in einem Datenspeicher, welcher in dem konfigurier- und/oder parametrierbaren Kleinsteuergerät austauschbar aufgenommen werden kann, oder direkt in einem integrierten Datenspeicher des Kleinsteuergeräts.

Die Schnittstelle des Kleinsteuergeräts muss dabei so ausgelegt sein, dass sie den Anforderungen an das industrielle Umfeld standhält. Neben den mechanischen Eigenschaften ist hierbei insbesondere auch die Elektromagnetische Verträglichkeit bzw. Festigkeit von Bedeutung, Weiterhin muss die Schnittstelle an dem Kleinsteuergerät gut erreichbar sein, insbesondere wenn dieses in einem Schaltschrank eingebaut ist.

Um die Nachteile einer leitungsgebundenen Schnittstelle zu eliminieren sind daher drahtlose Schnittstellen für Kleinsteuergeräte entwickelt worden, um eine drahtlose (engl. wireless) Konfiguration und/oder Parametrierung von Kleinsteuergeräten durchzuführen.

Aus der WO 2007/025879 A1 ist eine Anordnung zum Bedienen von Feldgeräten mittels einer separaten tragbaren Bedieneinheit bekannt, die über eine Funkverbindung mit jeweils einem Feldgerät kommuniziert, so dass ein einfacher und sicherer Verbindungsaufbau zwischen der Bedieneinheit und einem jeweils ausgewählten Feldgerät dadurch ermöglicht ist, dass das Feldgerät eine abtastbare Identifizierung trägt und dass die Bedieneinheit eine Leseeinheit zum Lesen der Identifizierung und Mittel zum Aufbau der Funkverbindung zu dem Feldgerät in Abhängigkeit von der gelesenen Identifizierung aufweist,

Aus der DE 10 2013 202 564 A1 ist ein Verfahren zum Parametrieren eines Slave-Busteilnehmers bekannt, der an einen Feldbus angeschlossen ist, mit einem Master-Busteilnehmer und einem Servicegerät, wobei der Slave-Busteilnehmer ein Display zur Anzeige eines optischen Codes mit einer Kennung zur eindeutigen Identifizierung des Slave-Busteilnehmer und des Master-Busteilnehmers aufweist, wobei der Master-Busteilnehmer und das Servicegerät über eine Funkverbindung miteinander kommunizieren können und das Servicegerät einen optischen Codeleser enthält.

Aus der DE 10 2011 078 366 A1 ist Verfahren zur Bereitstellung von zumindest einem Geräteobjekt für ein Feldgerät in der Automatisierungstechnik bekannt, wobei das Geräteobjekt zur Bedienung eines Feldgeräts eines vorgegebenen Feldgerätetyps oder zur Bereitstellung von Information über das Feldgerät geeignet ist und das Feldgerät in ein Bussystem eingebunden ist, auf dem der Datenaustausch über ein Busprotokoll erfolgt.

Ein Nachteil der drahtlosen Übertragung ist, dass keine gezielte Kommunikation mit einem zu parametrierenden oder zu konfigurierenden Kleinsteuergerät möglich ist und eine Kommunikation mit weiteren Geräten im Sendebereich nicht auszuschließen ist, und somit das Risiko von Fehlübertragungen besteht bzw. eine aufwändige Überprüfung erfolgen muss, ob mit dem gewünschten Gerät kommuniziert wird oder wurde.

Um diesen Nachteil der drahtlosen Übertragung zu überwinden, sind in der Automatisierungstechnik weitergehende Lösungen wie die NFC-Technologie (engl. Near Field Communication, NFC) mit geringen Funkreichweiten entwickelt worden, bei welchem ein Bediengerät, insbesondere dessen Antenne, zur drahtlosen Konfiguration und/oder Parametrierung räumlich nah an das Gerät herangeführt werden muss, so dass weitgehend sichergestellt ist, dass die Parameter und/oder die Konfiguration auf das gewünschte Gerät übertragen werden können.

Trotz der geringen Reichweite der NFC-Technologie kann, insbesondere bei mehreren schmalen, modularen Kleinsteuergeräten, welche auf einer Tragschiene in einem Schaltschrank angereiht montiert sind, nicht immer sichergestellt werden, zu welchem der Geräte tatsächlich eine Verbindung aufgebaut und Daten übertragen werden bzw. wurden.

Zudem weisen Kleinsteuergeräte oftmals auch mehr oder weniger aufwändige optische oder akustische Anzeigen auf, mittels welcher Kommunikationsverbindungen signalisiert und/oder Datenübertragungen bestätigt werden können.

Vor diesem Hintergrund besteht eine der Erfindung zugrunde liegende Aufgabe vor allem darin, eine Möglichkeit bereitzustellen, um Kleinsteuergeräte auf eine einfache und sichere Weise drahtlos auszuwählen und individuell zu konfigurieren und/oder zu parametrieren, Zudem sollten diese Kleinsteuergeräte durch eine einfache Handhabung eindeutig identifiziert und adressiert werden können und eine effektive sowie effiziente Konfiguration und/oder Parametrierung ermöglicht sein, wobei das Risiko einer fehlerhaften Konfiguration oder Parametrierung des zu konfigurierenden und/oder zu parametrierenden Kleinsteuergeräts und auch von weiteren Geräten im Sendebereich ausgeschlossen werden sollte.

Dementsprechend sollte die Erfindung insbesondere auch die Konfiguration und/oder Parametrierung eines konfigurierbaren und/oder parametrierbaren Sicherheits-Kleinsteuergeräts, wie beispielsweise eines Sicherheitsschaltgeräts realisieren.

Unter einem Sicherheitsschaltgerät wird nachfolgend ein Kleinsteuergerät verstanden, welches eine Sicherheitsfunktion, wie z.B. Schutzgitter, Schutztüren, Lichtschranken, Zweihandschalter oder Notausschalter, überwacht und bei Auftreten eines Fehlers entsprechend sicherheitsgerichtet schaltet. Andernfalls könnte von der zu überwachenden Sicherheitsfunktion im Falle eines Fehlers gegebenenfalls auch eine nicht zu vernachlässigende Gefahr für Menschen und/oder auch materielle Güter auftreten.

Daher sollte mit im Idealfall 100-prozentiger Sicherheit gewährleistet sein, dass bei Vorliegen eines Fehlers ein mit dieser Sicherheitsfunktion gekoppelter Prozess und/oder ein diese Sicherheitsfunktion umfassendes System in einen sicheren Zustand überführt wird. Insofern muss bei einem derartigen Sicherheitsschaltgerät mit auch im Idealfall 100-prozentiger Sicherheit gewährleistet sein, dass eine Konfiguration und/oder Parametrierung dieses Sicherheitsschaltgeräts fehlerfrei ist, um die Überführung in einen sicheren Zustand zu gewährleisten. Derartige, und also für die Sicherheit relevante, Sicherheitsschaltgeräte finden somit Einsatz z.B. bei der Überwachung von Schutzgittern, Schutztüren oder Lichtschranken, der Steuerung von Zweihandschaltern oder auch der Reaktion auf Notausschalter.

Die Übertragung von Konfigurations- und/oder Parametrierdaten auf ein falsches Kleinsteuergerät muss somit sicher ausgeschlossen werden und zweckmäßig gleichzeitig eine während der Übertragung erfolgte Datenverfälschung erkannt werden.

Die Erfindung schlagt hierzu als Lösung ein System zur drahtlosen Konfiguration und/oder Parametrierung von Kleinsteuergeräten mit den Merkmalen nach Anspruch 1 vor, ein Kleinsteuergerät mit den Merkmalen nach Anspruch 8, eine Software-Applikation mit den Merkmalen nach Anspruch 9 sowie ein Verfahren mit den Merkmalen nach Anspruch 10.

Weitere vorteilhafte Ausführungsformen der erfindungsgemäßen Gegenstände ergeben sich aus den jeweiligen abhängigen Ansprüchen.

Mit dem erfindungsgemäßen System zur Konfiguration und/oder Parametrierung von Kleinsteuergeräten werden für die Kleinsteuergeräte bestimmte Konfigurations- und/oder Parametrierdaten drahtlos übertragen.

Das erfindungsgemäße System kennzeichnet sich darin, dass das zu konfigurierende und/oder parametrierende Kleinsteuergerät eine eindeutige Gerätekennung besitzt, die in einem Datenspeicher dieses Kleinsteuergeräts gespeichert und an diesem Kleinsteuergerät optisch erfassbar an- oder aufgebracht ist.

Diese eindeutige Gerätekennung ist von einer Konfigurations- und/oder Parametrierungsvorrichtung optisch erfassbar und Konfigurations- und/oder Parametrierdaten (3) zuordenbar, die an ein Kleinsteuergerät zu übertragen sind, wobei die Konfigurations- und/oder Parametrierungsvorrichtung ferner ausgebildet ist, dass die Konfigurations- und/oder Parametrierungsdaten und die diesen zugeordnete Gerätekennung drahtlos an das Kleinsteuergerät übertragbar sind.

Erfindungsgemäß werden Konfigurations- und/oder Parametriezdaten, welche von einem Kleinsteuergerät von der Konfigurations- und/oder Parametrierungsvorrichtung empfangen werden, ferner nur dann zur Konfiguration und/oder Parametrierung innerhalb diesem Kleinsteuergerät eingesetzt, wenn die den empfangenen Konfigurations-und/oder Parametrierdaten zugeordnete Gerätekennung mit der in dem Datenspeicher des Kleinsteuergeräts gespeicherten Gerätekennung übereinstimmt.

Die Erfindung geht davon aus, dass eine in dem Kleinsteuergerät einmalig in einem Datenspeicher eingespeicherte eindeutige Gerätekennung, beispielsweise eine Seriennummer oder eine andere Kodierung, auf Basis welcher sich dieses Kleinsteuergerät eindeutig identifizieren lässt, auch an dem Kleinsteuergerät, insbesondere an dessen Außenseite, derart an- oder aufgebracht ist, dass die Gerätekennung optisch erfassbar ist.

Insbesondere ist eine solche Gerätekennung derart an einer Außenseite angebracht, dass diese auch im eingebauten Zustand des Kleinsteuergeräts und/oder mit daran angeschlossen Leitern oder Kabeln optisch erfassbar ist, beispielsweise an einer Vorderseite des Kleinsteuergeräts.

Hierbei kann eine Gerätekennung entweder bereits im Fertigungsprozess in dem zu konfigurierenden und/oder parametrierenden Kleinsteuergerät eingespeichert werden oder kann individuell von einem Anwender auf das Kleinsteuergerät gespeichert oder geändert werden, so dass das Kleinsteuergerät auch individuell adressiert und mit einer eindeutigen Gerätekennung versehen werden kann.

In einer bevorzugten Ausführungsform ist die optisch erfassbare, eindeutige Gerätekennung in einer Strich-und/oder Matrix-Kodierung, insbesondere als QR-Code, kodiert, welche an einer Außenseite des Kleinsteuergeräts auf- oder angebracht ist.

Vorteilhaft erfolgt dabei eine drahtlose Übertragung von Konfigurations- und/oder Parametrierdaten, welchen eine optisch erfasste Gerätekennung zugeordnet ist, über eine Funkschnittstelle des Kleinsteuergeräts und über eine Funkschnittstelle der Konfigurations- und Parametriervorrichtung, insbesondere mittels eines Funk-Übertragungssystem mit geringer Funkreichweite, z.B. nach dem NFC-Standard.

Das erfindungsgemäße System kann ferner zweckmäßig eine Vielzahl von Kleinsteuergeräten umfassen, die auf einer Tragschiene montiert sind.

In einer Weiterentwicklung der Erfindung ist mittels der Konfigurations- und/oder Parametrierungsvorrichtung, welche insbesondere als handgeführtes Gerät ausgebildet ist, eine eindeutige Gerätekennung mit einer optischen Schnittstelle der Konfigurations- und/oder Parametrierungsvorrichtung an einem Kleinsteuergerät optisch erfassbar.

In einer bevorzugten Ausführungsform sind mittels einer solchen Konfigurations- und/oder Parametrierungsvorrichtung Konfigurations- und/oder Parametrierdaten eines Kleinsteuergeräts auf Basis einer optisch erfassten Gerätekennung, insbesondere durch eine Software-Applikation, identifizierbar, erstellbar und/oder veränderbar.

In einer weiteren, besonders bevorzugten Ausführungsform des erfindungsgemäßen Systems erfolgt eine Konfiguration und/oder Parametrierung des Kleinsteuergeräts ausschließlich durch die drahtlose Übertragung von Konfigurations- und/oder Parametrierdaten nach einer der vorstehend beschriebenen Ausführungsformen, Dadurch ist zur Konfiguration und/oder Parametrierung keine Verbindung des Kleinsteuergerätes zu einem Netzwerk, einer Datenbank und/oder zu einer weiteren Konfigurations- und/oder Parametrierungsvorrichtung erforderlich,

Die Erfindung umfasst darüber hinaus ein Kleinsteuergerät, eine Konfigurations- und/oder Parametrierungsvorrichtung und/oder eine Software-Applikation für ein wie vorstehend beschriebenes System zur Konfiguration und/oder Parametrierung von Kleinsteuergeräten.

Das erfindungsgemäße Verfahren zur Konfiguration und/oder Parametrierung eines Kleinsteuergeräts umfasst die Schritte des optisches Erfassen einer eindeutigen Gerätekennung an dem Kleinsteuergerät, des Zuordnens dieser Gerätekennung zu Konfigurations- und/oder Parametrierdaten für das Kleinsteuergerät, des drahtlosen Sendens dieser Konfigurations- und/oder Parametrierdaten mit der zugeordneten Gerätekennung, des drahtlosen Empfangens mit dem Kleinsteuergerät dieser Konfigurations- und/oder Parametrierdaten mit der zugeordneten Gerätekennung,

In einem weiteren Schritt erfolgt ein Vergleichen der den empfangenen Konfigurations- und/oder Parametrierdaten zugeordneten Gerätekennung, mit einer in dem Datenspeicher des Kleinsteuergeräts gespeicherten Gerätekennung. Lediglich wenn eine Übereinstimmung vorliegt, werden dann diese Konfigurations- und/oder Parametrierdaten zur Konfiguration und/oder Parametrierung innerhalb des Kleinsteuergeräts verwendet.

Zusammenfassend werden somit erfindungsgemäß in einer Konfigurations- und/oder Parametrierungsvorrichtung eine eindeutige, auf dem Kleinsteuergerät angebrachte Gerätekennung mit den Konfigurations- und Parameterdaten in Verbindung gebracht. Infolge dieser Zuordnung können diese Konfigurations- und Parameterdaten nur von dem Kleinsteuergerät mit identischer eindeutiger Gerätekennung konsumiert und verarbeitet werden. Eine derartig erfolgte Zuordnung zwischen Gerätekennung und Konfigurations- und Parameterdaten wird nachfolgend auch als Projekt oder Geräte-Projekt bezeichnet.

Ein solches Projekt kann nun drahtlos übertragen werden. Empfängt eines oder mehrere Kleinsteuergeräte dieses Projekt, so wird es nur von dem Kleinsteuergerät mit einer identischen Gerätekennung zur weiteren Verarbeitung angenommen.

Der Vorteil dieses Verfahrens liegt somit in der Eindeutigkeit der Gerätekennung. Daten werden daher nur an das zuvor durch die Gerätekennung identifizierte Kleinsteuergerät übertragen, so dass keine weitere Selektion des Kleinsteuergerätes, wie z.B. ein Heraustrennen des Kleinsteuergerätes aus dem Verbund im Schaltschrank, damit nur dieses drahtlos erreicht werden kann, erforderlich ist.

Diese und weitere Merkmale und Vorteile ergeben sich auch aus der folgenden Beschreibung von Ausführungsbeispielen in Zusammenhang mit den beiliegenden Figuren.

Es zeigen
- Figur 1: eine schematische Darstellung einer ersten Ausführungsform des erfindungsgemäßen Systems und Verfahrens zur drahtlosen Konfiguration und/oder Parametrierung eines Kleinsteuergeräts mit einer handgeführten Konfigurations- und/oder Parametrierungsvorrichtung;
- Figur 2: eine schematische Darstellung des erfindungsgemäßen Verfahrens in einem Kleinsteuergerät;
- Figur 3: eine schematische Darstellung einer zweiten Ausführungsform des erfindungsgemäßen Systems und Verfahrens zur drahtlosen Konfiguration und/oder Parametrierung eines als Sicherheitsschaltgerät ausgebildeten Kleinsteuergerätes;

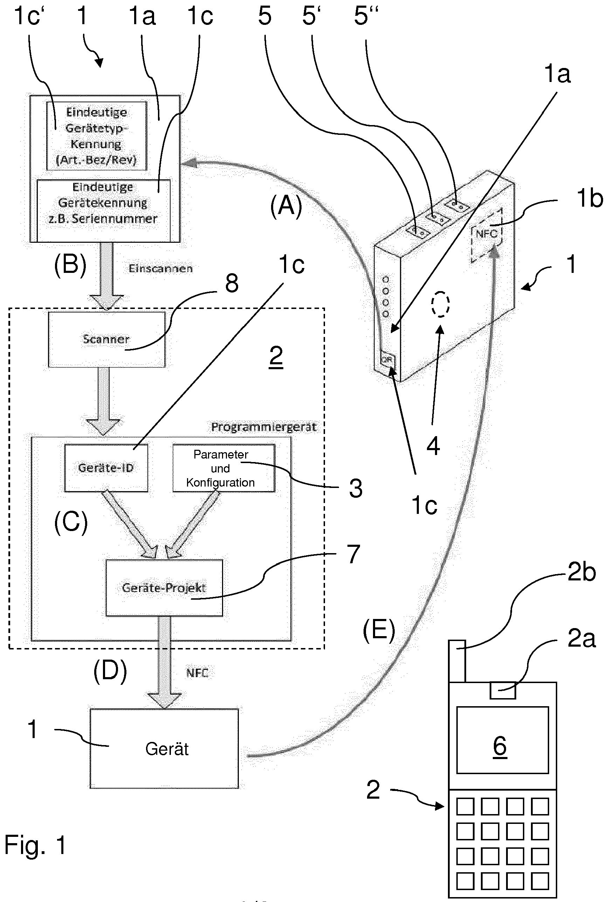

Mit Figur 1 ist eine erste Ausführungsform des erfindungsgemäßen Systems und Verfahrens zur drahtlosen Konfiguration und/oder Parametrierung eines Kleinsteuergeräts gezeigt, bei welcher das Kleinsteuergerät 1 zweckmäßig mit einer handgeführten Konfigurations-und/oder Parametrierungsvorrichtung 2 konfiguriert und/oder parametriert wird, wobei auch fest installierte Konfigurations- und/oder Parametrierungsvorrichtungen oder entsprechende Programmiereinrichtungen, mit mehreren Einheiten, wie beispielsweise Scanner, Kamera, Mobilteil, Festteil etc. zur Anwendung kommen können, beispielsweise in einer Fertigungsstraße.

Figur 1 zeigt hierzu in der linken Figurenhälfte schematisch einen Verfahrensablauf und in der rechten Figurenhälfte das drahtlos zu konfigurierende und/oder parametrierende Kleinsteuergerät 1, welches zweckmäßig als Modul zum Aufstecken auf eine Schiene, zusammen mit einer Vielzahl von weiteren Kleinsteuergeräten, ausgestaltet ist, sowie darunter angeordnet, eine zur drahtlosen Konfiguration und/oder Parametrierung eingesetzte handgeführte Konfigurations- und/oder Parametrierungsvorrichtung 2, beispielsweise ein Mobiltelefon, ein Smartphone, ein Laptop oder ein Computer.

Das Kleinsteuergerät 1 weist zum Anschluss von elektrischen Leitern, beispielsweise von Draht- oder Litzenleitern, drei Kontaktklemmenreihen 5, 5' und 5" auf, über welche eines oder mehrere Ein- oder Ausgangssignale auf das Kleinsteuergerät 1 bzw. von dem Kleinsteuergerät 1 übertragen werden können. Alternativ oder ergänzend ist es auch möglich, dass ein oder mehrere Ein- und/oder Ausgangssignale über andersartig gestaltete Schnittstellen an dem Kleinsteuergerät, beispielsweise über eine Netzwerkschnittstelle oder auch drahtlos über eine Funkschnittstelle übertragen werden können.

Das als Modul ausgebildete Kleinsteuergerät 1 besitzt eine eindeutige Gerätekennung 1c. Diese ist an der Außenseite 1a an einer Frontblende optisch erfassbar angebracht und zweckmäßig in einer Matrix-Kodierung kodiert. Alternative Kodierungen beispielsweise Strich-Codes, QR-Codes oder andere eindimensional, zweidimensional oder gegebenenfalls auch dreidimensional ausgestaltete Codes sind hierfür ebenfalls vorteilhaft einsetzbar.

Im vorliegenden Beispiel handelt es um eine Matrix-Kodierung, beispielsweise eine einmalige und/oder individuelle Seriennummer des Kleinsteuergerätes, in welcher die eindeutige Gerätekennung 1c des Kleinsteuergerätes kodiert ist. Darüber hinaus ist es alternativ oder auch ergänzend möglich, eine eindeutige Gerätetypkennung 1c', beispielsweise eine Artikelbezeichnung oder eine Revisionsbezeichnung in der Gerätekennung zu hinterlegen.

Da die Art und Weise der optischen Kodierung für die Erfindung nicht wesentlich ist, und für einen Fachmann an und für sich diverse Kodier-Verfahren bekannt sind, wird auf die Kodierung nicht näher eingegangen. Wesentlich ist lediglich, dass die optische Gerätekennung 1c je nach Umfang der darin zu hinterlegenden Daten, ausreichend ist, welches sowohl über die Art und die Größe als auch über das Kodierverfahren beeinflusst werden kann.

Die eindeutige Gerätekennung 1c ist zudem in einem Datenspeicher 4 des Kleinsteuergeräts 1 elektronisch gespeichert.

In der vorteilhaften Ausgestaltung nach Fig. 1 sind ferner zur Signalisierung verschiedener Betriebszustände des Kleinsteuergeräts zweckmäßig eine Vielzahl von Signalleuchten an der Frontblende angebracht.

Darüber hinaus weist das Kleinsteuergerät 1 zweckmäßig eine als Nahkommunikations-Schnittstelle ausgebildete Funk-Schnittstelle 1b auf, über welche Konfigurations- und/oder Parametrierdaten mit geringer Sendereichweite von der Konfigurations- und/oder Parametrierungsvorrichtung 2 drahtlos empfangen werden können.

Die Konfigurations- und/oder Parametrierungsvorrichtung 2 ist zur optischen Erfassung der eindeutigen Gerätekennung 1c an dem Kleinsteuergerät 1 zweckmäßig mit einer, z.B. als Kamera ausgebildeten, optischen Schnittstelle 2a ausgebildet. Wie nachfolgend beschrieben, wird im vorliegenden Fall der Fig. 1 jedoch keine Kamera sondern ein Scanner 8 eingesetzt, über welchen die Gerätekennung optisch erfasst wird.

Weiterhin ist mit der Konfigurations- und/oder Parametrierungsvorrichtung 2 zweckmäßig eine Software-Applikation 6 betreibbar, um eine erfasste, eindeutige Gerätekennung 1c Konfigurations- und/oder Parametrierdaten 3 für das Kleinsteuergerät 1 zuordnen zu können, welche dann über eine Funkschnittstelle 2b der Konfigurations-und/oder Parametrierungsvorrichtung 2 drahtlos an das Kleinsteuergerät 1 gesendet und übertragen werden kann.

Solche Konfigurations- und/oder Parametrierdaten 3 können in die Konfigurations- und/oder Parametrierungsvorrichtung 2 z.B. über eine in den Figuren nicht weiter dargestellte Schnittstelle geladen werden z.B. aus einer Datenbank, oder mittels einer Software-Applikation aus einem bestimmten, jedoch im Wesentlichen beliebigen Netz. Je nach Ausführungsform können die Konfigurations- und/oder Parametrierungsvorrichtung auch ergänzend oder alternativ direkt in der Konfigurations- und/oder Parametrierungsvorrichtung, z.B. mittels eines entsprechenden Konfigurations- und/oder Parametrierungsmenü generiert bzw. erzeugt werden.

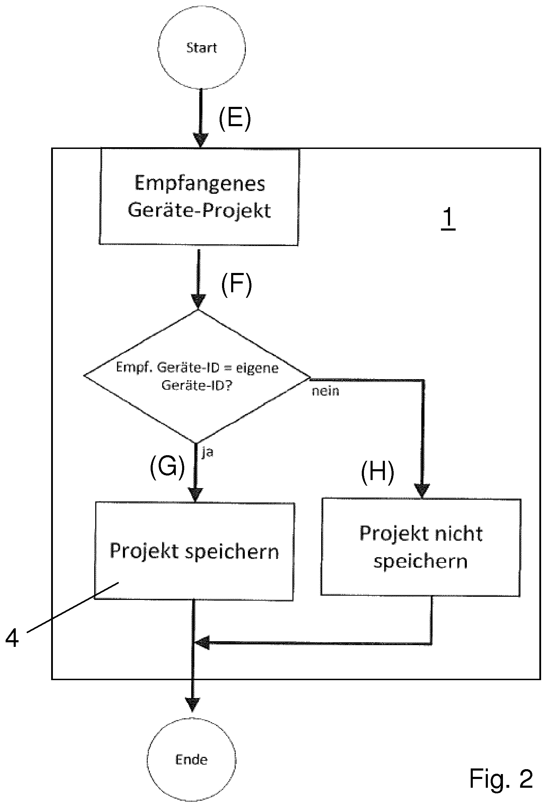

Erfindungsgemäß werden die Konfigurations- und/oder Parametrierdaten 3 von dem Kleinsteuergerät 1 von der Konfigurations- und/oder Parametrierungsvorrichtung empfangen und nur dann zur Konfiguration und/oder Parametrierung innerhalb des Kleinsteuergeräts 1 eingesetzt, wenn die den empfangenen Konfigurations-und/oder Parametrierdaten 3 zugeordnete Gerätekennung 1c mit der in dem Datenspeicher 4 des Kleinsteuergeräts 1 gespeicherten Gerätekennung 1c übereinstimmt, wie insbesondere auch der Fig. 2 zu entnehmen ist.

Darüber hinaus ist das in Fig. 1 gezeigte System zur drahtlosen Konfiguration und/oder Parametrierung von Kleinsteuergeräten zweckmäßig derart ausgebildet, dass eine Konfiguration und/oder Parametrierung des Kleinsteuergeräts ausschließlich durch Übertragung dieser Konfigurations-und/oder Parametrierdaten 3 erfolgt. Infolgedessen ist bei einer solchen bevorzugten Ausführungsform zur Konfiguration und/oder Parametrierung keine Verbindung des Kleinsteuergerätes 1 zu einem Netzwerk, einer Datenbank und/oder zu einer weiteren Konfigurations- und/oder Parametrierungsvorrichtung erforderlich, mit anderen Worten, ist das Kleinsteuergerät lediglich mittels der Konfigurations- und/oder Parametrierungsvorrichtung 2 individuell konfigurierbar und/oder parametrierbar.

Auf der linken Figurenhälfte von Fig. 1 ist schematisch der Ablauf eines gemäß dem vorliegenden Ausführungsbeispiel entsprechenden Verfahrens dargestellt, mittels welchem das Kleinsteuergerät 1 mit der Konfigurations- und/oder Parametrierungsvorrichtung 2 konfiguriert- und/oder parametriert werden kann.

In einem ersten Schritt, der bei Fig. 1 mit (A) bezeichnet ist, wird die an der Frontblende 2 des Kleinsteuergeräts 1 angebrachte Gerätekennung 1c welche zudem in einem Datenspeicher 4 des Kleinsteuergeräts 1 elektronisch gespeichert ist, optisch erfasst.

Die optische Erfassung erfolgt im vorliegenden Beispiel, bei Fig. 1 mit (B) bezeichnet, vorzugsweise mittels Einscannen durch einen Scanner 8, der zweckmäßig als handgeführter Scanner betrieben werden kann und beim Erfassungsvorgang mit der Konfigurations- und/oder Parametrierungsvorrichtung 2 verbunden sein oder von dieser getrennt sein kann. wobei in jedem Falle nach der Erfassung einer Gerätekennung 1c, diese auf die Konfigurations-und/oder Parametrierungsvorrichtung 2 durch eine Datenübertragung jeglicher Art übertragen werden.

In einem weiteren Schritt, bei Fig. 1 mit (C) bezeichnet, erfolgt ein Zuordnen der eingelesenen bzw. optisch erfassen Gerätekennung 1c zu Konfigurations- und/oder Parametrierdaten 3 für das Kleinsteuergerät 1. Zweckmäßig werden hierbei Konfigurations- und/oder Parametrierdaten 3 für das Kleinsteuergerät mit der erfassten Gerätekennung zu einem Geräteprojekt 7 verknüpft, beispielsweise als elektronisches Datenprotokoll mit einem Header, welcher diese Gerätekennung aufweist.

Vorteilhaft ist es hierbei insbesondere auch, wenn mit der Konfigurations- und/oder Parametrierungsvorrichtung Konfigurations- und/oder Parametrierdaten 3 für das Kleinsteuergerät 1 auf Basis der optisch erfassten Gerätekennung 1c, insbesondere durch die Software-Applikation und/oder eine Datenbankanwendung, identifizierbar, erstellbar und/oder veränderbar sind. Vorzugsweise kann dies als softwareimplementiertes Geräteprojekt erfolgen, in welchem vorzugsweise die Gerätekennung 1c den Konfigurations- und/oder Parametrierdaten 3 zugeordnet werden kann bzw. wird.

In einem weiteren Schritt, bei Fig. 1 mit (D) bezeichnet, werden mit der Konfigurations- und/oder Parametrierungsvorrichtung 2 die Konfigurations- und/oder Parametrierdaten 3 mit der zugeordneten Gerätekennung drahtlos an das Kleinsteuergerät 1 als Geräteprojekt gesendet, im vorliegenden Fall über ein Funk-Übertragungssystem mit geringer Funkreichweite, beilspielsweise nach dem NFC-Standard.

Nach dem Empfang des Geräteprojekt das heißt der Konfigurations- und/oder Parametrierdaten 3 mit der zugeordneten Gerätekennung, in den Fign. 1 und 2 mit (E) bezeichnet, werden diese von dem Kleinsteuergerät 1 erfindungsgemäß verwendet bzw. verarbeitet und zweckmäßig gespeichert, wobei diese Konfigurations- und/oder Parametrierdaten 3 nur dann auf diesem Kleinsteuergerät 1 verwendet bzw. verarbeitet und zweckmäßig gespeichert werden, beispielsweise in den Speicher 4 des Kleinsteuergeräts 1 oder in einen weiteren nicht in den Figuren bezeichneten Speicher, wenn die Gerätekennung 1c mit der in dem Datenspeicher 4 des Kleinsteuergeräts 1 gespeicherten Gerätekennung 1c übereinstimmt.

Sofern eine Vielzahl von weiteren Kleinsteuergeräten im Sendebereich der Konfigurations- und/oder Parametrierungsvorrichtung 2 vorhanden sind, welche beispielsweise auf einer Hutschiene in einem Geräteschrank neben dem zu konfigurierenden und/oder parametrierenden Kleinsteuergerät angebracht sind, können diese grundsätzlich ebenfalls zum Empfang des Geräteprojekts bzw. der Konfigurations- und/oder Parametrierdaten 3 mit der zugeordneten Gerätekennung ausgebildet sein.

Erfindungsgemäß findet daher in dem Kleinsteuergerät ein Vergleich statt, bei Fig. 2 mit (F) bezeichnet, ob die den empfangenen Konfigurations- und/oder Parametrierdaten 3 zugeordnete Gerätekennung, 1 mit einer in dem Datenspeicher 4 des Kleinsteuergeräts 1 gespeicherten Gerätekennung 1c übereinstimmt. In Fig. 2 ist dabei eine Gerätekennung 1c als Geräte-ID bezeichnet.

Wenn eine Übereinstimmung dieser Gerätekennung 1c mit der in dem Datenspeicher 4 des Kleinsteuergeräts 1 gespeicherten Gerätekennung 1c übereinstimmt, erfolgt anschließend in einem weiteren Schritt, bei Fig. 2 mit (G) bezeichnet, eine Verwendung bzw. Verarbeitung und zweckmäßig Speicherung dieser Konfigurations- und/oder Parametrierdaten 3 in dem Kleinsteuergerät 1 als Geräteprojekt.

Wenn keine Übereinstimmung dieser Gerätekennung 1c mit der in dem Datenspeicher 4 des Kleinsteuergeräts 1 gespeicherten Gerätekennung 1c vorliegt, erfolgt keine Speicherung der Konfigurations- und/oder Parametrierdaten 3 bzw. des Geräteprojekts, das heißt, es wird in einem alternativen Schritt, bei Fig. 2 mit (H) bezeichnet, eine Speicherung des Geräteprojekts vermieden bzw, dieses Geräteprojekt ignoriert, das heißt, die Konfigurations-und/oder Parametrierdaten 3 werden in dem Speicher 4 des Kleinsteuergerätes nicht gespeichert, nicht verarbeitet oder anderweitig verwendet.

In einer nicht in den Figuren gezeigten, ergänzenden Ausführungsform des erfindungsgemäßen Verfahrens, wird mit der Konfigurations- und/oder Parametrierungsvorrichtung 2 zuerst lediglich eine Gerätekennung an das Kleinsteuergerät 1 gesendet und von diesem empfangen. In diesem Fall werden erst im Anschluss eines Vergleichs, ob die empfangene Gerätekennung 1 mit einer in dem Datenspeicher 4 des Kleinsteuergeräts 1 gespeicherten Gerätekennung 1c übereinstimmt, die Konfigurations- und/oder Parametrierdaten 3 von der Konfigurations- und/oder Parametrierungsvorrichtung 2 angefordert bzw. gesendet, wobei diese Daten dann wiederum nur von dem Kleinsteuergerät 1 verwendet bzw. verarbeitet und zweckmäßig gespeichert werden, das zuvor die Übereinstimmung der empfangenen Gerätekennung 1 mit der in dem Datenspeicher 4 des Kleinsteuergeräts 1 gespeicherten Gerätekennung 1c festgestellt hat. Andererseits können auch erst zunächst die Konfigurations- und/oder Parametrierdaten 3 von der Konfigurations- und/oder Parametrierungsvorrichtung 2 übertragen werden und anschließend, zur Durchführung des Vergleichs des Kleinsteuergeräts 1, die zuvor optisch erfasste und zugeordnete Gerätekennung.

Die drahtlose Übertragung der Konfigurations- und/oder Parametrierdaten und der zugeordneten Gerätekennung von der Konfigurations- und/oder Parametrierungsvorrichtung an das Kleinsteuergerät muss daher je nach Anwendungsfall nicht zwingend gleichzeitig erfolgen. Mit anderen Worten kann die Übertragung der Konfigurations- und/oder Parametrierdaten somit auch separat zu der zugeordneten Gerätekennung eines Projekts 7 erfolgen.

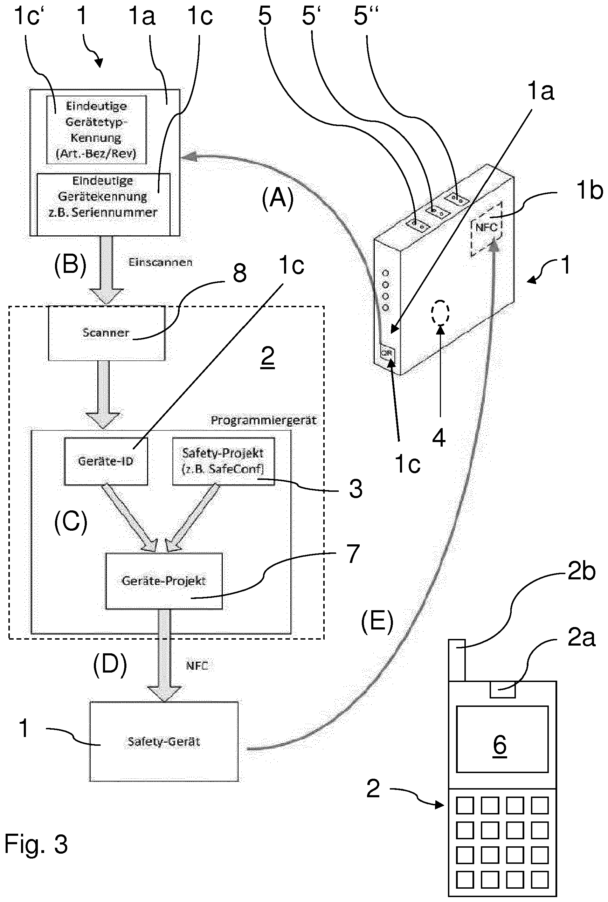

Wie z.B, der Fig. 3 zu entnehmen, welche eine zur Fig. 1 ähnliche Ausführungsform zeigt, eignet sich durch die eindeutige Zuordnung des Gerätes zu den Konfigurations- und Parameterdaten das erfindungsgemäße System und Verfahren insbesondere auch für konfigurierbare Sicherheitsschaltgeräte.

Fig. 3 zeigt hierzu im Unterschied zu Fig. 1 ein Ausführungsbeispiel, bei dem in einem Schritt (C) zur Konfiguration und/oder Parametrierung eines als Sicherheitsschaltgerät 1 ausgebildeten Kleinsteuergeräts eine optisch erfasste, eindeutige Gerätekennung 1c Konfigurations- und Parametrierdaten 3 zugeordnet wird bzw. ist, welche gemäß Fig. 3 beispielsweise einem Sicherheitsprojekt entnommen sind.

Hierbei kann die Gerätekennung 1c z.B. Konfigurations-und/oder Parametrierdaten 3 zugeordnet werden, welche bereits Prüfdaten zur Absicherung gegen eine Datenverfälschung aufweisen. Ergänzend oder alternativ ist es auch möglich, dass ein auf ein Kleinsteuergerät 1 zu übertragendes Geräteprojekt 7 insgesamt mit solchen Prüfdaten versehen wird, d.h. bei der Zuordnung der Gerätekennung 1c zu den Konfigurations- und/oder Parametrierdaten 3 erfolgt eine Verknüpfung entsprechend einer geforderten Sicherheit,

Zusätzlich zur Prüfung auf Übereinstimmung der optisch erfassten Gerätekennung 1c mit der in dem Kleinsteuergerät gespeicherten Gerätekennung kann somit noch eine während der Übertragung erfolgte Datenverfälschung erkannt werden, indem die Prüfdaten und die weiteren übermittelten Daten, bestehend aus der Gerätekennung 1c sowie den Konfigurations- und Parametrierdaten 3, in dem Kleinsteuergerät 1 auf Korrektheit geprüft werden. Insbesondere bei der Konfiguration und/oder Parametrierung von Sicherheitsgeräten erfolgt die drahtlose Übertragung der Konfigurations- und/oder Parametrierdaten und der diesen zugeordneten Gerätekennung von der Konfigurations-und/oder Parametrierungsvorrichtung an das Kleinsteuergerät daher besonders zweckmäßig gleichzeitig. Mit anderen Worten erfolgt die Übertragung der Konfigurations- und/oder Parametrierdaten und der diesen zugeordneten Gerätekennung somit zweckmäßig gemeinsam als Projekt 7 insgesamt, z.B. als vorgenanntes elektronisches Datenprotokoll.

### Bezugszeichenliste:

- 1: Kleinsteuergerät
- 1a: Außenseite
- 1b: Funk-Schnittstelle des Kleinsteuergeräts
- 1c: Gerätekennung
- 2: Konfigurations- und/oder Parametrierungsvorrichtung
- 2a: optische Schnittstelle der Konfigurations-und/oder Parametrierungsvorrichtung
- 2b: Funk-Schnittstelle der Konfigurations-und/oder Parametrierungsvorrichtung
- 3: Konfigurations- und/oder Parametrierdaten
- 4: Datenspeicher
- 5, 5', 53": Kontaktklemmenreihe
- 6: Software-Applikation
- 7: Geräteprojekt
- 8: Scanner

## Patentansprüche

1. System zur Konfiguration und/oder Parametrierung von Kleinsteuergeräten (1), umfassend Mittel zum drahtlosen Übertragen von Konfigurations- und/oder Parametrierdaten (3), welche für die Kleinsteuergeräte (1) bestimmt sind, wobei ein jeweiliges Kleinsteuergerät (1) eine eindeutige Gerätekennung (1c) besitzt, die in einem Datenspeicher (4) dieses Kleinsteuergeräts (1) gespeichert und an diesem Kleinsteuergerät (1) optisch erfassbar an- oder aufgebracht ist, das System weiter umfassend eine Konfigurations-und/oder Parametrierungsvorrichtung, die dazu eingerichtet ist, diese eindeutige Gerätekennung (1c) optisch zu erfassen und Konfigurations- und/oder Parametrierdaten (3) die an ein Kleinsteuergerät (1) zu übertragen sind, zuzuordnen, **dadurch gekennzeichnet, dass**
die Konfigurations- und/oder Parametrierungsvorrichtung ferner ausgebildet ist, dass die Konfiguration- und/oder Parametrierdaten und die diesen zugeordnete Gerätekennung von der Konfigurations- und/oder Parametrierungsvorrichtung drahtlos an das Kleinsteuergerät (1) gleichzeitig übertragbar sind, wobei
Konfigurations- und/oder Parametrierdaten (3), welche von einem Kleinsteuergerät (1) empfangen werden, nur dann zur Konfiguration und/oder Parametrierung innerhalb diesem Kleinsteuergerät (1) gespeichert werden, wenn die gleichzeitig empfangene, diesen Konfiguration- und/oder Parametrierdaten (3) zugeordnete Gerätekennung (1c) mit der in dem Datenspeicher (4) des Kleinsteuergeräts (1) gespeicherten Gerätekennung, (1c) übereinstimmt.

2. System zur Konfiguration und/oder Parametrierung von Kleinsteuergeräten (1) nach einem der vorstehenden Ansprüche, wobei die optisch erfassbare, eindeutige Gerätekennung (1c) in einer Strich- und/oder Matrix-Kodierung kodiert ist, die an einer Außenseite (1a) des Kleinsteuergeräts (1) auf- oder angebracht ist.

3. System zur Konfiguration und/oder Parametrierung von Kleinsteuergeräten (1) nach einem der vorstehenden Ansprüche, wobei eine drahtlose Übertragung von Konfigurations- und/oder Parametrierdaten (3), welchen eine optisch erfasste Gerätekennung (1c) zugeordnet ist, über eine Funkschnittstelle (1b) des Kleinsteuergeräts (1) und über eine Funkschnittstelle (2b) der Konfigurations-und/oder Parametrierungsvorrichtung, insbesondere mittels eines Funk-Übertragungssystem mit geringer Funkreichweite, erfolgt.

4. System zur Konfiguration und/oder Parametrierung von Kleinsteuergeräten (1) nach einem der vorstehenden Ansprüche umfassend eine Vielzahl von Kleinsteuergeräten (1), die auf einer Tragschiene montiert sind.

5. System zur Konfiguration und/oder Parametrierung von Kleinsteuergeräten (1) nach einem der vorstehenden Ansprüche, wobei mittels der, insbesondere handgeführten, Konfigurations- und/oder Parametrierungsvorrichtung (2), eine eindeutige Gerätekennung, (1c) an einem Kleinsteuergerät (1) mit einer optischen Schnittstelle (2a) der Konfigurations- und/oder Parametrierungsvorrichtung (2) optisch erfassbar ist.

6. System zur Konfiguration und/oder Parametrierung von Kleinsteuergeräten (1) nach einem der vorstehenden Ansprüche, wobei Konfigurations- und/oder Parametrierdaten (3) eines Kleinsteuergeräts (1) auf Basis einer optisch erfassten Gerätekennung (1c), insbesondere durch eine Software-Applikation, identifizierbar, erstellbar und/oder veränderbar sind.

7. System zur Konfiguration und/oder Parametrierung von Kleinsteuergeräten (1) nach Anspruch 1, wobei eine Konfiguration und/oder Parametrierung des Kleinsteuergeräts ausschließlich durch die drahtlose Übertragung von Konfigurations- und/oder Parametrierdaten (3) nach einem der vorstehenden Ansprüche erfolgt.

8. Kleinsteuergerät (1) zur Konfiguration und/oder Parametrierung mit einem System gemäß einem der Ansprüche 1 bis 7, wobei:
Konfigurations- und/oder Parametrierdaten (3), welche für das Kleinsteuergerät (1) bestimmt sind, drahtlos an dieses übertragen werden,
das Kleinsteuergerät (1) eine eindeutige Gerätekennung (1c) besitzt, die in einem Datenspeicher (4) dieses Kleinsteuergeräts (1) gespeichert und an diesem Kleinsteuergerät (1) optisch erfassbar an- oder aufgebracht ist, und wobei
diese eindeutige Gerätekennung, (1c) von einer Konfiguration- und/oder Parametrierungsvorrichtung (2) optisch erfassbar und Konfigurations- und/oder Parametrierdaten (3) zuordenbar ist, die an das Kleinsteuergerät (1) zu übertragen sind,
**dadurch gekenntzeichnet, dass**
das Kleinsteuergerät (1) ferner ausgebildet ist, dass die Konfigurations- und/oder Parametrierdaten und die diesen zugeordnete Gerätekennung von der Konfigurations- und/oder Parametrierungsvorrichtung (2) drahtlos an das Kleinsteuergerät (1) gleichzeitig übertragbar sind, wobei Konfigurations- und/oder Parametrierdaten (3), welche von dem Kleinsteuergerät (1) empfangen werden, nur dann zur Konfiguration und/oder Parametrierung innerhalb diesem Kleinsteuergerät (1) gespeichert werden, wenn die gleichzeitig empfangene, diesen Konfigurations- und/oder Parametrierdaten (3) zugeordnete Gerätekennung (1c) mit der in dem Datenspeicher (4) des Kleinsteuergeräts (1) gespeicherten Gerätekennung (1c) übereinstimmt.

9. Software-Applikation zur Konfiguration und/oder Parametrierung von Kleinsteuergeräten (1) mit einem System gemäß einem der Ansprüche 1, bis 7, wobei:
Konfiguration- und/oder Parametrierdaten (3), welche für das Kleinsteuergerät (1) bestimmt sind, drahtlos an dieses übertragen werden,
das Kleinsteuergerät (1) eine eindeutige Gerätekennung (1c) besitzt, die in einem Datenspeicher (4) dieses Kleinsteuergeräts (1) gespeichert und an diesem Kleinsteuergerät (1) optisch erfassbar an- oder aufgebracht ist, und wobei
diese eindeutige Gerätekennung (1c) von der Konfigurations-und/oder Parametrierungsvorrichtung (2) optisch erfassbar und Konfigurations- und/oder Parametrierdaten (3) zuordenbar ist, die an das Kleinsteuergerät (1) zu übertragen sind,
**dadurch gekennzeichnet, dass**
die Konfigurations- und/oder Parametrierungsvorrichtung ferner ausgebildet ist, dass die Konfigurations- und/oder Parametrierdaten und die diesen zugeordnete Gerätekennung von der Konfigurations- und/oder Parametrierungsvorrichtung drahtlos an das Kleinsteuergerät (1) gleichzeitig übertragbar sind, wobei
Konfigurations- und/oder Parametrierdaten (3), welche von dem Kleinsteuergerät (1) empfangen werden, nur dann zur Konfiguration und/oder Parametrierung innerhalb diesem Kleinsteuergerät (1) gespeichert werden, wenn die gleichzeitig empfangene, diesen Konfigurations- und/oder Parametrierdaten (3) zugeordnete Gerätekennung (1c) mit der in dem Datenspeicher (4) des Kleinsteuergeräts (1) gespeicherten Gerätekennung (1c) übereinstimmt.

10. Verfahren zur Konfiguration und/oder Parametrierung eines Kleinsteuergeräts (1) gemäß Anspruch 8 umfassend die Schritte
- optisches Erfassen einer eindeutigen Gerätekennung (1c) an dem Kleinsteuergerät (1);
- Zuordnen dieser Gerätekennung (1c) zu Konfigurations-und/oder Parametrierdaten (3) für das Kleinsteuergerät (1);
- drahtloses, gleichzeitiges Senden dieser Konfigurations-und/oder Parametrierdaten (3) und der zugeordneten Gerätekennung (1c);
- drahtloses Empfangen mit dem Kleinsteuergerät (1) dieser Konfigurations- und/oder Parametrierdaten (3) und der zugeordneten Gerätekennung, (1c);
- Vergleichen der gleichzeitig empfangenen, diesen Konfigurations- und/oder Parametrierdaten (3) zugeordneten Gerätekennung, (1c) mit einer in dem Datenspeicher (4) des Kleinsteuergeräts (1) gespeicherten Gerätekennung (1c) und wenn eine Übereinstimmung vorliegt,
- Speichern dieser Konfigurations- und/oder Parametrierdaten (3) zur Konfiguration und/oder Parametrierung innerhalb des Kleinsteuergeräts (1).

## Claims

1. A system for configuration and/or parameterisation of miniature control units (1), comprising means for wireless transfer of configuration and/or parameterisation data (3) which are intended for the miniature control units (1), wherein each miniature control unit (1) has a unique device identifier (1c) that is stored in a data memory (4) of this miniature control unit (1) and is attached to or on this miniature control unit (1) so as to be optically identifiable; the system further comprising a configuration and/or parameterisation device that is adapted to optically identify this unique device identifier (1c) and to associate configuration and/or parameterisation data (3) that are to be transferred to a miniature control unit (1) ;
**characterized in that**
the configuration and/or parameterisation device is further configured such that the configuration and/or parameterisation data and the device identifier associated therewith can be simultaneously transferred in wireless manner from the configuration and/or parameterisation device to the miniature control unit (1); wherein
configuration and/or parameterisation data (3) that are received by a miniature control unit (1) are only stored for configuration and/or parameterisation within this miniature control unit (1) if the simultaneously received device identifier (1c) associated with these configuration and/or parameterisation data (3) matches the device identifier (1c) that is stored in the data memory (4) of the miniature control unit (1).

2. The system for configuration and/or parameterisation of miniature control units (1) according to any one of the preceding claims, wherein the optically identifiable unique device identifier (1c) is encoded in a bar and/or matrix code which is attached to or on an outer surface (1a) of the miniature control unit (1).

3. The system for configuration and/or parameterisation of miniature control units (1) according to any one of the preceding claims, wherein wireless transfer of configuration and/or parameterisation data (3) with an optically identified device identifier (1c) associated therewith is performed via a wireless interface (1b) of the miniature control unit (1) and via a wireless interface (2b) of the configuration and/or parameterisation device, in particular using a wireless transfer system with small wireless range.

4. The system for configuration and/or parameterisation of miniature control units (1) according to any one of the preceding claims, comprising a plurality of miniature control units (1) mounted on a support rail.

5. The system for configuration and/or parameterisation of miniature control units (1) according to any one of the preceding claims, wherein the configuration and/or parameterisation device (2) can be used, in particular in manually controlled manner, to optically identify a unique device identifier (1c) on a miniature control units (1) using an optical interface (2a) of the configuration and/or parameterisation device (2).

6. The system for configuration and/or parameterisation of miniature control units (1) according to any one of the preceding claims, wherein configuration and/or parameterisation data (3) of a miniature control unit (1) can be identified, generated and/or modified based on an optically identified device identifier (1c), in particular using a software application.

7. The system for configuration and/or parameterisation of miniature control units (1) according to claim 1, wherein configuration and/or parameterisation of the miniature control unit is performed exclusively through the wireless transfer of configuration and/or parameterisation data (3) according to any one of the preceding claims.

8. A miniature control unit (1) for configuration and/or parameterisation with a system according to any one of claims 1 to 7, wherein:
configuration and/or parameterisation data (3) that are intended for said miniature control unit (1) are transferred thereto in wireless manner;
the miniature control unit (1) has a unique device identifier (1c) that is stored in a data memory (4) of said miniature control unit (1) and is attached to or on said miniature control unit (1) so as to be optically identifiable; and wherein
said unique device identifier (1c) can be optically identified by a configuration and/or parameterisation device (2) and can be associated with configuration and/or parameterisation data (3) that are to be transferred to said miniature control unit (1); **characterized in that**
the miniature control unit (1) is further configured such that the configuration and/or parameterisation data and the device identifier associated therewith can be simultaneously transferred in wireless manner from the configuration and/or parameterisation device to said miniature control unit (1); wherein
configuration and/or parameterisation data (3) that are received by said miniature control unit (1) are only stored for configuration and/or parameterisation within said miniature control unit (1) if the simultaneously received device identifier (1c) associated with these configuration and/or parameterisation data (3) matches the device identifier (1c) that is stored in the data memory (4) of said miniature control unit (1).

9. A software application for configuration and/or parameterisation of miniature control units (1) with a system according to any one of claims 1 to 7, wherein:
configuration and/or parameterisation data (3) that are intended for the miniature control unit (1) are transferred thereto in wireless manner;
the miniature control unit (1) has a unique device identifier (1c) that is stored in a data memory (4) of said miniature control unit (1) and is attached to or on said miniature control unit (1) so as to be optically identifiable; and wherein
this unique device identifier (1c) can be optically identified by the configuration and/or parameterisation device (2) and can be associated with configuration and/or parameterisation data (3) that are to be transferred to the miniature control unit (1); **characterized in that**
the configuration and/or parameterisation device is further configured such that the configuration and/or parameterisation data and the device identifier associated therewith can be simultaneously transferred in wireless manner from the configuration and/or parameterisation device to the miniature control unit (1); wherein
configuration and/or parameterisation data (3) that are received by the miniature control unit (1) are only stored for configuration and/or parameterisation within this miniature control unit (1) if the simultaneously received device identifier (1c) associated with these configuration and/or parameterisation data (3) matches the device identifier (1c) that is stored in the data memory (4) of the miniature control unit (1).

10. A method for configuration and/or parameterisation of a miniature control unit (1) according to claim 8, comprising the steps of
- optically detecting a unique device identifier (1c) on the miniature control unit (1);
- associating said device identifier (1c) with configuration and/or parameterisation data (3) for the miniature control unit (1);
- simultaneously transmitting, in wireless manner, these configuration and/or parameterisation data (3) and the associated device identifier (1c);
- receiving, in wireless manner, these configuration and/or parameter data (3) and the associated device identifier (1c) by the miniature control unit (1);
- comparing the simultaneously received device identifier (1c) associated with these configuration and/or parameter data (3) with a device identifier (1c) that is stored in the data memory (4) of the miniature control unit (1); and,
in case of a match,
- storing these configuration and/or parameterisation data (3) for configuration and/or parameterisation within the miniature control unit (1).

## Revendications

1. Système de configuration et/ou de paramétrage de petits appareils de commande (1), comprenant des moyens pour la transmission sans fil de données de configuration et/ou de paramétrage (3), lesquelles sont destinées aux petits appareils de commande (1), dans lequel chaque petit appareil de commande (1) possède un numéro d'identification (1c) unique qui est mis en mémoire dans une mémoire de données (4) de ce petit appareil de commande (1) et qui peut être mis en place ou appliqué sur ce petit appareil de commande (1) de manière à pouvoir être détecté optiquement, le système comprenant en outre un dispositif de configuration et/ou de paramétrage qui est conçu pour détecter optiquement ce numéro d'identification (1c) unique et pour l'associer à des données de configuration et/ou de paramétrage (3) qui sont transmises à un petit appareil de commande (1),
**caractérisé en ce que**
le dispositif de configuration et/ou de paramétrage est conçu en outre pour que les données de configuration et/ou de paramétrage et le numéro d'identification associé à celles-ci puissent être transférés simultanément sans fil au petit appareil de commande (1) par le dispositif de configuration et/ou de paramétrage, dans lequel
les données de configuration et/ou de paramétrage (3), lesquelles sont reçues par un petit appareil de commande (1), ne sont mises en mémoire à l'intérieur de ce petit appareil de commande (1), pour la configuration et/ou le paramétrage, que lorsque le numéro d'identification (1c) reçu simultanément, associé à ces données de configuration et/ou de paramétrage (3), concorde avec le numéro d'identification (1c) mis en mémoire dans la mémoire de données (4) du petit appareil de commande (1).

2. Système de configuration et/ou de paramétrage de petits appareils de commande (1) selon l'une quelconque des revendications précédentes, dans lequel le numéro d'identification (1c) unique, pouvant être détecté optiquement, est codé dans un code-barres et/ou un code matriciel qui est mis en place ou appliqué sur une face extérieure (1a) du petit appareil de commande (1).

3. Système de configuration et/ou de paramétrage de petits appareils de commande (1) selon l'une quelconque des revendications précédentes, dans lequel une transmission sans fil de données de configuration et/ou de paramétrage (3), auxquelles est associé un numéro d'identification (1c) détecté optiquement, est réalisée par l'intermédiaire d'une interface (1b) du petit appareil de commande (1) et par l'intermédiaire d'une interface (2b) du dispositif de configuration et/ou de paramétrage, en particulier au moyen d'un système de transmission radio à faible portée radio.

4. Système de configuration et/ou de paramétrage de petits appareils de commande (1) selon l'une quelconque des revendications précédentes, comprenant une pluralité de petits appareils de commande (1) qui sont montés sur un rail de support.

5. Système de configuration et/ou de paramétrage de petits appareils de commande (1) selon l'une quelconque des revendications précédentes, dans lequel un numéro d'identification (1c) unique sur un petit appareil de commande (1) peut être détecté optiquement par l'intermédiaire d'une interface optique (2a) du dispositif de configuration et/ou de paramétrage (2) au moyen du dispositif de configuration et/ou de paramétrage (2), en particulier portatif.

6. Système de configuration et/ou de paramétrage de petits appareils de commande (1) selon l'une quelconque des revendications précédentes, dans lequel les données de configuration et/ou de paramétrage (3) d'un petit appareil de commande (1) peuvent être identifiées, créées et/ou modifiées sur la base d'un numéro d'identification (1c) détecté optiquement, en particulier par une application logicielle.

7. Système de configuration et/ou de paramétrage de petits appareils de commande (1) selon la revendication 1, dans lequel une configuration et/ou un paramétrage du petit appareil de commande sont réalisés exclusivement par la transmission sans fil de données de configuration et/ou de paramétrage (3) selon l'une quelconque des revendications précédentes.

8. Petit appareil de commande (1) à configurer et/ou à paramétrer comprenant un système selon l'une quelconque des revendications 1 à 7, dans lequel :
les données de configuration et/ou de paramétrage (3), lesquelles sont destinées au petit appareil de commande (1), sont transmises sans fil à celui-ci,
le petit appareil de commande (1) possède un numéro d'identification (1c) unique, qui est mis en mémoire dans une mémoire de données (4) de ce petit appareil de commande (1) et mis en place ou appliqué sur ce petit appareil de commande (1) de manière à pouvoir être détecté optiquement, et dans lequel
ce numéro d'identification (1c) unique peut être détecté optiquement par un dispositif de configuration et/ou de paramétrage (2) et peut être associé aux données de configuration et/ou de paramétrage (3), qui doivent être transmises au petit appareil de commande (1),
**caractérisé en ce que**
le petit appareil de commande (1) est conçu en outre pour que les données de configuration et/ou de paramétrage et le numéro d'identification associé à celles-ci puissent être transférés simultanément sans fil au petit appareil de commande (1) par le dispositif de configuration et/ou de paramétrage (2), dans lequel
les données de configuration et/ou de paramétrage (3), lesquelles sont reçues par le petit appareil de commande (1), ne sont mises en mémoire à l'intérieur de ce petit appareil de commande (1), pour la configuration et/ou le paramétrage, que lorsque le numéro d'identification (1c) reçu simultanément, associé à ces données de configuration et/ou de paramétrage (3), concorde avec le numéro d'identification (1c) mis en mémoire dans la mémoire de données (4) du petit appareil de commande (1).

9. Application logicielle pour la configuration et/ou le paramétrage de petits appareils de commande (1) comprenant un système selon l'une quelconque des revendications 1 à 7, dans lequel :
les données de configuration et/ou de paramétrage (3), lesquelles sont destinées au petit appareil de commande (1), sont transmises sans fil à celui-ci,
le petit appareil de commande (1) possède un numéro d'identification (1c) unique qui est mis en mémoire dans une mémoire de données (4) de ce petit appareil de commande (1) et qui peut être mis en place ou appliqué sur ce petit appareil de commande (1) de manière à pouvoir être détecté optiquement, et dans lequel
ce numéro d'identification (1c) unique peut être détecté optiquement par le dispositif de configuration et/ou de paramétrage (2) et peut être associé aux données de configuration et/ou de paramétrage (3), qui sont transmises au petit appareil de commande (1),
**caractérisé en ce que**
le dispositif de configuration et/ou de paramétrage est conçu en outre pour que les données de configuration et/ou de paramétrage et le numéro d'identification associé à celles-ci puissent être transférés simultanément sans fil au petit appareil de commande (1) par le dispositif de configuration et/ou de paramétrage, dans lequel
les données de configuration et/ou de paramétrage (3), lesquelles sont reçues par le petit appareil de commande (1), ne sont mises en mémoire à l'intérieur de ce petit appareil de commande (1), pour la configuration et/ou le paramétrage, que lorsque le numéro d'identification (1c) reçu simultanément, associé à ces données de configuration et/ou de paramétrage (3), concorde avec le numéro d'identification (1c) mis en mémoire dans la mémoire de données (4) du petit appareil de commande (1).

10. Procédé de configuration et/ou de paramétrage d'un petit appareil de commande (1) selon la revendication 8 comprenant les étapes suivantes :
- détecter optiquement un numéro d'identification (1c) unique sur le petit appareil de commande (1) ;
- associer ce numéro d'identification (1c) à des données de configuration et/ou de paramétrage (3) pour le petit appareil de commande (1) ;
- envoyer simultanément sans fil ces données de configuration et/ou de paramétrage (3) et le numéro d'identification (1c) associé ;
- recevoir sans fil avec le petit appareil de commande (1) ces données de configuration et/ou de paramétrage (3) et le numéro d'identification (1c) associé ;
- comparer le numéro d'identification (1c) reçu simultanément, associé à ces données de configuration et/ou de paramétrage (3), à un numéro d'identification (1c) mis en mémoire dans la mémoire de données (4) du petit appareil de commande (1) et,
en présence d'une concordance,
- mettre en mémoire ces données de configuration et/ou de paramétrage (3) pour la configuration et/ou le paramétrage à l'intérieur du petit appareil de commande (1).
